# EUROPÄISCHE PATENTSCHRIFT

(11) **EP 2 639 042 B1**
(45) Veröffentlichungstag und Bekanntmachung des Hinweises auf die Patenterteilung: **12.11.2014**
(21) Anmeldenummer: 13159036.6
(22) Anmeldetag: 13.03.2013
(51) Int. Cl.: B29C 49/04

(54) **Blasformsystem**
Blow moulding system
Système de formage par soufflage

(30) Priorität: 13.03.2012 DE 102012102086
(43) Veröffentlichungstag der Anmeldung: 18.09.2013
(73) Patentinhaber: EXTRAPLAST Maschinen GmbH, 53842 Troisdorf (DE)
(72) Erfinder: Forsbach Heinz-Peter, 53842 Troisdorf (DE)
(74) Vertreter: Fritz, Edmund Lothar

(56) Entgegenhaltungen:
- WO-A1-02/081180
- DE-A1- 2 553 247
- DE-A1- 3 843 342

## Beschreibung

Die vorliegende Erfindung betrifft ein Blasformsystem zur Herstellung von Hohlkörpern durch Blasformen umfassend wenigstens eine Extrudereinrichtung mit Extruderschnecke in einem Extrudergehäuse, wenigstens einen der Extruderschnecke zugeordneten Extruderkopf (Schlauchkopf) sowie wenigstens eine Blasformeinrichtung mit wenigstens einer Blasform, wobei zwischen Extruderkopf und Extrudergehäuse eine gelenkige Verbindung mit mindestens zwei Gelenken vorgesehen ist, so dass bei feststehender Position des Extrudergehäuses eine vertikale Relativbewegung des Extruderkopfs gegenüber dem Extrudergehäuse sowie gegenüber der Blasformeinrichtung und der Blasform möglich ist, wobei der Extruderkopf über ein Gelenkarmsystem mit dem vorderen Bereich des Extrudergehäuses verbunden ist, welches mindestens einen ersten gelenkig mit dem Extrudergehäuse verbundenen Gelenkarm umfasst, sowie mindestens einen zweiten Gelenkarm der mit dem ersten Gelenkarm gelenkig verbunden ist und an dessen einem Ende der Extruderkopf angebracht ist.

Bei herkömmlichen Blasformsystemen bilden die Extrudereinrichtung mit der Extruderschnecke und der Extruderkopf, das heißt der Kopf des Extruders, an dem der heiße und weiche plastische Kunststoffschlauch austritt und der in der Fachsprache auch als Schlauchkopf bezeichnet wird, eine starr miteinander verbundene Einheit. Der Massestrom der Kunststoffmasse, der von der Schneckenspitze des Extruders in der Regel über ein Anschlussstück bis in den Schlauchkopf geleitet wird, steht unter einem hohen Druck von je nach Rohstoff beispielsweise in der Größenordnung von 80 bar bis 250 bar. Außerdem sind diese Bauteile des Extruders in der Regel beheizt, um eine vorzeitige Abkühlung der Kunststoffmasse zu verhindern.

Es gibt beim Blasformen Operationen, bei denen es vorteilhaft wäre, wenn die Möglichkeit bestünde, den Extruderkopf relativ zu der Blasform in vertikaler Richtung (also auf und ab) zu bewegen. In der DE 10 2007 041 776 A1 ist ein Blasformsystem zur Herstellung von Hohlkörpern beschrieben, bei der ein Extrudergestell aus einem ortsfesten Extruderuntergestell besteht, auf das ein Tragrahmen aufgelegt ist. Dieser Extrudertragrahmen ist mittels Extruderhubeinrichtungen in der Höhe verfahrbar, wozu zwei Hubeinrichtungen erforderlich sind. Da Extruder und Extruderkopf auch hier wie üblich eine untrennbare Einheit bilden, wird hier der gesamte Extruder mit dem Extruderkopf angehoben, wozu eine große Masse bewegt werden muss. Folglich ist es sehr aufwändig, in dieser Form den gesamten Extruder mit seinem Tragrahmen anzuheben, um eine Operation durchzuführen, bei der während des Blasformens nur der Extruderkopf in vertikaler Richtung bewegt werden muss.

Aus dem Stand der Technik ist auch das so genannte "Nicken" des Extruderkopfs bekannt, wobei es sich um eine Operation handelt, bei der wiederum die ganze Extrudereinrichtung mit Extruderkopf über ein Gelenk eine Kippbewegung (Nicken) durchführt, was allerdings nur in einem sehr kleinen Winkelbereich möglich ist, von beispielsweise in etwa 5 °, so dass auch der Hub des Extruderkopfs dabei sehr gering ist. Auch hier muss für diese Bewegung der gesamte Extruder und somit eine große Masse bewegt werden. Größere Schwenkwinkel sind nicht möglich ebenso wenig wie ein Verfahren des Extruderkopfs um einen größeren Hub.

Bislang hat in der Blasformtechnik niemand daran gedacht, dass eine Trennung (Entkopplung) zwischen Extruder und Extruderkopf technisch sinnvoll und möglich sein könnte, da es zum einen sehr wichtig ist, dass von der Extruderschnecke zum Extruderkopf ein stets gleichbleibender Massestrom fließt. Zudem herrschen in diesem Bereich sehr hohe Drücke, die Rohrteile des Systems, die mit der heißen plastischen Kunststoffmasse in Berührung kommen müssen hoch abriebfest sein und der Kunststoff darf nur eine sehr geringe Rohrhaftung an diesen Bauteilen haben.

In der DE 25 53 247 A1 wird eine Anlage zur Herstellung von Kunststofffolien mittels eines Breitschlitzdüsenwerkzeugs beschrieben. Hier handelt es sich um eine andere Technologie. Während beim Blasformen von Hohlkörpern der Extruderkopf ein Schlauchkopf ist, mittels dessen ein Vorformling (Schlauch) ausgestoßen (kontinuierlich oder über einen Massespeicher) wird, welcher dann in dem nachfolgenden Blasformprozess ausgeblasen wird, ist das Extrudieren von Folien ein kontinuierlicher Prozess, bei dem die kontinuierlich aus der Breitschlitzdüse austretende extrudierte Folie auf eine Rolle aufgewickelt wird. Eine Höhenverstellung des Extruderkopfs während dieses kontinuierlichen Prozesses ist technisch nicht möglich und würde zu einem Abriss der Folie führen. Bei diesem bekannten Verfahren ist eine Verstellung des Breitschlitzdüsenwerkzeugs in der Höhe oder auch seitlich gegenüber der Kühlwalze vorgesehen, was technisch eigentlich nur möglich ist, wenn der Extrusionsprozess dabei unterbrochen wird. Bei dieser bekannten Anlage besteht die Massenflussleitung vom Extruderkopf zur Breitschlitzdüse aus Gelenken und teleskopierenden Rohrabschnitten. Letztere schieben sich bei einer Bewegung, die eine reine Höhenverstellung der Breitschlitzdüse ist, ineinander, wodurch sich die von dem Extrudat zurückzulegende Länge der Massenflussleitung zwischen einem am Extruderkopf vorgesehenen Gelenk und einem Gelenk an der Breitschlitzdüse verkürzt. Eine derartige Verstellung bei einem Blasformverfahren zur Herstellung von Hohlkörpern aus einem Vorformling während des Zyklus würde zu einer Volumenveränderung der plastischen Kunststoffmasse führen, wodurch es unmöglich würde, einen brauchbaren Vorformling mit gleichbleibender Wandstärke herzustellen.

Bei dieser bekannten Anlage wird zwar eine Verbindung mit drei Gelenken und zwei teleskopierenden Gelenkarmen zwischen Extrudergehäuse (Schnecke) und Extruderkopf verwendet, die Gelenkarme schwenken aber bei einer Hubbewegung des Extruderkopf in der gleichen Schwenkebene, das heißt beide Gelenkarme verändern beim Schwenken nur ihre Winkelstellung zueinander, bewegen sich dabei aber in der gleichen Schwenkebene. Dies bedeutet, wenn man die Distanz zwischen dem Ende des Extrudergehäuses und dem Extruderkopf konstant halten will (reine auf und ab Bewegung), müssen die Gelenkarme zwingend teleskopierend ausgebildet sein. Die Schwenkwege und Schwenkwinkel der Gelenkarme sind bei dieser Ausgestaltung der Gelenkarme und Gelenke auch begrenzt.

Die WO 02/081180 A1 beschreibt ein Blasformsystem mit den Merkmalen der eingangs genannten Gattung. Hier wird eine Extrusionsblasmaschine verwendet, bei der die Extrusionseinheit mit der Schnecke, an deren vorderem Ende sich der Extruderkopf befindet, am hinteren Ende der Schnecke im Bereich des Getriebegehäuses für den Extruder über ein Gelenk gelagert ist, so dass eine Neigung des gesamten Extruders mit der Schnecke möglich ist. Weiterhin ist hier auch der Extruderkopf gelenkig über ein Rohrgelenk mit der Schnecke verbunden. Bei dieser bekannten Extrusionsblasmaschine führt eine vertikale Bewegung des Extruderkopfes zu einer kleinen Neigung im Rohrgelenk am vorderen Ende der Schnecke, zu einer kleinen Neigung im Extrudergelenk am hinteren Ende der Schnecke im Bereich der Anbindung zum Getriebegehäuse und einer Längsverschiebung der gesamten Extrusionseinheit über einen Schlitten, auf dem das Getriebegehäuse angeordnet ist. Es sind also hier nur Kippbewegungen in vergleichsweise kleinen Winkelbereichen möglich, wobei eine Verstellung nicht nur im Bereich zwischen Extruderkopf und Schnecke erfolgt, sondern auch mit einer Neigung des ganzen Extruders und dessen Längsverschiebung verbunden ist.

Die Aufgabe der vorliegenden Erfindung besteht darin, ein verbessertes Blasformsystem der eingangs genannten Art zur Verfügung zu stellen, welches eine vertikale Relativbewegung des Extruderkopfs gegenüber der Blasform zulässt, ohne die Extrudereinrichtung insgesamt zu bewegen.

Die Lösung dieser Aufgabe liefert ein Blasformsystem zur Herstellung von Hohlkörpern der eingangs genannten Gattung mit den kennzeichnenden Merkmalen des Hauptanspruchs.

Erfindungsgemäß ist vorgesehen, dass der erste Gelenkarm und der zweite Gelenkarm geeignet sind, so zu schwenken, dass sich ihre Hübe je nach Drehstellung addieren oder subtrahieren und dass die Gelenkachsen der Gelenkarme zueinander parallel verlaufen.

Während in dem oben zitierten Stand der Technik gemäß WO 02/081180 zwischen Extruderkopf und Schnecke zwei senkrecht zueinander verlaufende Rohrgelenke angeordnet sind, verwendet die vorliegende Erfindung zwei Gelenkarme, deren Gelenkachsen, um die diese Gelenkarme gegenüber Schnecke bzw. Extruderkopf schwenken, zueinander parallel verlaufen. Dies führt zu einer völlig anderen Kinematik. Der Extruderkopf kann sich nunmehr linear auf und ab bewegen, ohne dass sich die Schnecke oder das Extrudergehäuse dabei neigen oder in Längsrichtung verschieben. Bei einer Aufwärts-Bewegung des Extruderkopfs wird der an diesem gelenkig angebrachte zweite Gelenkarm mitgenommen und sowohl dieser als auch der erste Gelenkarm drehen sich dabei so, dass sich ihre Hübe in einer oberen Position des Extruderkopfs quasi addieren. Das Schneckengehäuse und die übrigen Bauteile der Maschine bewegen sich dabei nicht mit. Bewegt sich der Extruderkopf in eine Position etwa in Höhe des Schneckengehäuses, stellen sich die Gelenkarme quer, so dass sich ihre Hübe subtrahieren, im Sinne der hierin verwendeten Definition. Bewegt sich dann der Extruderkopf über die feste Achse des Extrudergehäuses hinaus weiter nach unten, addieren sich die Hübe der Gelenkarme wieder, von der Extrudergehäuseachse aus gesehen in der entgegengesetzten Richtung. Der maximale Hub in der Bewegung des Extruderkopfs gegenüber dem Extrudergehäuse ist dann gegeben, wenn beide Gelenkarme so stehen, dass sie keinen Winkel mehr miteinander einschließen, das heißt, dass sie, wenn man in Richtung der Gelenkachse sieht, einander in einer Richtung senkrecht zur Gelenkachse maximal verlängern. In der Stellung mit minimalem Hub stehen hingegen die Gelenkarme so, dass sie bei Sicht auf diese in Richtung der Gelenkachsen sich mindestens teilweise überdecken, also hintereinander liegen. Im Gegensatz zu dem aus der DE 25 53 247 A1 bekannten System zum Blasformen von Folien mittels einer Breitschlitzdüse schwenken bei der erfindungsgemäßen Lösung die Schwenkarme nicht in der gleichen Schwenkebene, sondern in parallelen, seitlich zueinander versetzten Schwenkebenen, das heißt, die Schwenkarme können sich auch nebeneinander und aneinander vorbei bewegen. Weiterhin liegt ein wesentlicher Unterschied zu dem genannten Stand der Technik darin, dass die Länge der Schwenkarme auch bei rein linearer vertikaler Hubbewegung des Extruderkopfs konstant bleibt. Außerdem kann die Hubbewegung des Extruderkopfs während des Blasformzyklus erfolgen, ohne den dabei zwingend erforderlichen konstanten Massestrom der Kunststoffmasse von der Extruderschnecke zum Extruderkopf zu beeinträchtigen.

Die erfindungsgemäße Lösung bietet verschiedene Vorteile. Beispielsweise kann man bei Blasformverfahren, bei denen man einen kontinuierlichen Vorformling oberhalb der Form aus dem Extruderkopf austreten lässt, den Extruderkopf während dieser Operation anheben. Dies schafft die Möglichkeit, Wartezeiten im Prozess einzusparen, denn in der Zeit, in der bereits eine neuer Vorformling aus dem Extruderkopf austritt, kann noch unterhalb des Extruderkopfs in der geschlossenen Blasform ein Ausblasvorgang stattfinden. Gegebenenfalls ist es erfindungsgemäß auch möglich, den Extruderkopf anzuheben und gleichzeitig aus dem Arbeitsbereich der Blasformeinrichtung wegzuschwenken, was durch die Verwendung von zwei oder drei oder mehr Gelenken in der gelenkigen Verbindung zwischen Extruder und Extruderkopf ohne weiteres möglich wird.

Analoge Vorteile ergeben sich bei denjenigen Varianten des Blasformens, bei denen man mit einem Kopfspeicher arbeitet, so dass der Vorformling aus dem Extruderkopf diskontinuierlich austritt (auch als Staukopf bezeichnet.) Hier kann man beispielsweise einen längeren Schlauch aus dem Extruderkopf austreten lassen, ohne dass dieser mit der darunter befindlichen Blasform kollidiert, da man den Extruderkopf während des Ausstoßens (oder vor dem Ausstoßen) in eine höhere Position bringen kann.

Ein erheblicher Vorteil beim Arbeiten mit einem kontinuierlichen Schlauchkopf ergibt sich, wenn ein Farbwechsel der Kunststoffmasse notwendig wird. Die erforderliche Übergangszeit bei der Umstellung lässt sich durch das erfindungsgemäße System erheblich verkürzen.

Anders als bei bisherigen Anlagen ist es auch möglich, ohne Schlauchzubringer zu arbeiten, mittels dessen man bislang den Schlauch in die Blasform einbringt. Stattdessen lässt sich nun der Extruderkopf absenken, um den fertig ausgestoßenen Schlauch in die Form einzuführen.

Auch beim herkömmlichen Blasformen von beispielsweise Kanistern ergeben sich aufgrund der Beweglichkeit des Extruderkopfs unabhängig vom Extruder selbst Vorteile im Verfahrensablauf. Es ergeben sich zusätzliche Bewegungsfreiheitsgrade und die Parallelität von Arbeitsschritten ermöglicht es, die Zykluszeit zu verkürzen.

Die erfindungsgemäße gelenkige Anbindung des Extruderkopfs an den Extruder und somit die Entkopplung dieser beiden im Stand der Technik fest miteinander verbundenen Einheiten, ist auch bei der Variante des Saugblasens mit Vorteilen anwendbar.

Gemäß einer bevorzugten Weiterbildung der vorliegenden Erfindung ist vorgesehen, dass zwischen Extruderkopf und Extrudergehäuse eine gelenkige Verbindung mit mindestens drei Gelenken vorhanden ist, deren Gelenkachsen jeweils zueinander parallel verlaufen, wobei bei einer Hubbewegung des Extruderkopfs die Länge des ersten Gelenkarms und des zweiten Gelenkarms jeweils unveränderlich ist und wobei die Schwenkebene des zweiten Gelenkarms parallel versetzt zur Schwenkebene des ersten Gelenkarms verläuft.

Bevorzugt ist es weiterhin so, dass der erste Gelenkarm des Gelenkarmsystems über ein erstes Gelenk schwenkbar am Extrudergehäuse angebracht ist, der erste Gelenkarm mit Abstand von dem ersten Gelenk über ein zweites Gelenk mit dem zweiten Gelenkarm gelenkig verbunden ist, wobei die Gelenkachse dieses zweiten Gelenks parallel zu der Gelenkachse des ersten Gelenks verläuft und der zweite Gelenkarm mit Abstand von dem zweiten Gelenk über ein drittes Gelenk mit dem Extruderkopf verbunden ist, wobei die Gelenkachse dieses dritten Gelenks parallel zu der Gelenkachse des zweiten Gelenks verläuft.

Der erste Gelenkarm ist somit bevorzugt etwa in seinem einen Endbereich gelenkig an den Extruder angebunden und erstreckt sich von dort aus bis zum Anbindungspunkt an den zweiten Gelenkarm, welcher beispielsweise sich etwa vom Endbereich des ersten Gelenkarms, wo sich das zweite Gelenk befinden kann, bis zum Extruderkopf erstreckt.

Bevorzugt ist es gemäß einer Weiterbildung der Erfindung so, dass in der maximalen Hubstellung des Extruderkopfs gegenüber dem Extrudergehäuse der erste Gelenkarm und der zweite Gelenkarm so ausgerichtet sind, dass sich ihre Hubwege addieren und die Gelenkachse des am Extruderkopf angebundenen Gelenks, insbesondere des dritten Gelenks, eine maximale Entfernung zur Gelenkachse des ersten Gelenks aufweist, während in einer minimalen Hubstellung des Extruderkopfs gegenüber dem Extrudergehäuse sich die Hubwege der beiden Gelenkarme subtrahieren und die Gelenkachse des am Extruderkopf angebundenen Gelenks und die Gelenkachse des ersten Gelenks zusammenfallen oder nahe beieinander liegen. Anders als im Stand der Technik ist es dabei wie gesagt so, dass sich die Gelenkarme, die sich ja in parallelen Schwenkebenen bewegen, aneinander vorbei bewegen und nicht nur ihre Winkelstellung zueinander verändern. Der erste Gelenkarm, der im vorderen Bereich vom Extrudergehäuse ausgeht, kann sich also bei maximaler Hubstellung beispielsweise etwa senkrecht nach oben hin erstrecken und auch der zweite Gelenkarm kann sich dabei etwa senkrecht nach oben erstrecken, so dass, wenn sich die Gelenke jeweils etwa in den Endbereichen der Gelenkarme befinden, der Hub des Extruderkopfs gegenüber dem Extrudergehäuse etwa der Summe der Längen der Gelenkarme entspricht. In einer minimalen (untersten) Hubstellung des Extruderkopfs kann sich der erste Gelenkarm beispielsweise vom Extrudergehäuse ausgehend etwa senkrecht nach unten hin erstrecken und auch der zweite Gelenkarm kann sich vom ersten Gelenkarm ausgehend etwa senkrecht nach oben hin erstrecken, so dass die unterste Stellung des Extruderkopfs sich durch die Summe der Längen der Gelenkarme definiert, die dann jedoch einen Schwenkwinkel von jeweils etwa 180 ° gegenüber der obersten Hubstellung vollzogen haben. Es sind somit wesentlich größere Schwenkwinkel der Gelenkarme möglich, theoretisch können diese um 360 ° um ein Gelenk in ihrem einen Endbereich drehen. In Zwischenstellungen des Extruderkopfs heben sich die Hübe der Gelenkarme teilweise gegenseitig auf, da sich die Gelenkarme aneinander vorbei bewegen.

Wählt man erfindungsgemäß eine Variante mit einer gelenkigen Verbindung mit mindestens zwei Gelenkarmen und mindestens drei Gelenken zwischen Extruderkopf und Extrudergehäuse, ist es möglich, den Extruderkopf in einer linearen Bewegung anzuheben und abzusenken, bei gleichbleibender Länge der Gelenkarme. Es können auch beispielsweise drei Gelenkarme verwendet werden. Dann kann beispielsweise ein dritter Gelenkarm in Verlängerung zum zweiten Gelenkarm vorhanden sein, an dessen einem Ende der Extruderkopf angebracht ist.

Bevorzugt ist es gemäß der Erfindung so, dass der Extruderkopf bei einer Schwenkbewegung beider Gelenkarme eine lineare rein vertikale Hubbewegung vollführt entlang einer Linie, deren Entfernung zum vorderen Ende des Extrudergehäuses bei der Hubbewegung gleichbleibend ist, bei ebenfalls gleichbleibender Länge der Gelenkarme und bei feststehendem Extrudergehäuse. Eine derartige Hubbewegung ist bei den aus dem Stand der Technik bekannten Gelenkarmanordnungen nicht möglich.

Im Rahmen der vorliegenden Erfindung sind hauptsächlich zwei Varianten der Anbindung des Gelenkarmsystems am Extrudergehäuse vorgesehen. Bei einer ersten Variante erstreckt sich die Gelenkachse des ersten Gelenks in Richtung der Achse des Extrudergehäuses oder parallel dazu, wobei sich das erste Gelenk vorn endseitig am Extrudergehäuse befindet und sich die Gelenkachsen des zweiten und dritten Gelenks parallel zur Achse des Extrudergehäuses erstrecken. Bei der alternativen zweiten Variante erstreckt sich die Gelenkachse des ersten Gelenks quer zur Achse des Extrudergehäuses, wobei sich das erste Gelenk im vorderen Bereich seitlich am Extrudergehäuse befindet und sich die Gelenkachsen des zweiten und dritten Gelenks ebenfalls quer zur Achse des Extrudergehäuses erstrecken. Beide Vrianten unterscheiden sich somit nur hinsichtlich ihrer Anbindung am Extrudergehäuse, wodurch sich eine unterschiedliche relative Ausrichtung der Gelenkachsen bezogen auf das Extrudergehäuse ergibt, wobei aber die Kinematik der Gelenkarme bei Hub des Extruderkopfs ansonsten gleich bleibt.

Gemäß einer bevorzugten Weiterbildung der Erfindung können die Gelenke jeweils beispielsweise so aufgebaut sein, dass sie mindestens zwei gegeneinander um die Gelenkachse verschwenkbare Gelenkteile aufweist, in denen sich jeweils Kanäle für die plastische Kunststoffmasse befinden, deren einander zugewandte Abschnitte in der Gelenkachse miteinander fluchten und eine durchgehende Verbindung mit bei Verdrehung des Gelenks gleichbleibendem Querschnitt bilden. Die plastische heiße Kunststoffmasse wird also quasi durch das Gelenk selbst hindurchgeleitet, wobei sich in jedem der Gelenkteil jeweils ein Teilabschnitt des Kanals für die Kunststoffmasse befindet. Dadurch, dass die Teilabschnitte der beiden Gelenkteile, die bei der Schwenkbewegung gegeneinander verdreht werden, teilweise miteinander fluchten, und zwar in der Gelenkachse, bleibt bei der Verdrehung der Querschnitt des Kanals auch im Gelenk selbst unverändert, was hier sehr wichtig ist, damit der Massestrom entsprechend der Extruderförderung gleichmäßig fließen kann.

Bei Verwendung von zwei solcher gegeneinander verdrehbarer Gelenkteile, in denen sich jeweils Kanäle für die plastische Kunststoffmasse befinden, kann beispielsweise eines dieser Gelenkteile mit einem ersten Gelenkarm verbunden sein, welcher zu der Extrudereinrichtung führt und das andere Gelenkteil mit einem zweiten Gelenkarm verbunden sein, welcher zum Extruderkopf führt. In diesen Gelenkarmen kann sich der Kanal, durch den die plastische Kunststoffmasse fließt, jeweils fortsetzen.

Die beiden gegeneinander verdrehbaren Gelenkteile müssen so miteinander verbunden werden, dass der Übergang zwischen den miteinander fluchtenden Abschnitten der Kanäle bei den hohen herrschenden Drücken dicht ist, aber dennoch das Verdrehen der Gelenkteile gegeneinander ohne zu hohen Kraftaufwand möglich ist. Dazu sind bevorzugt mindestens zwei um die Gelenkachse verschwenkbare Gelenkteile eines Gelenks in einem Rahmen oder einer Halterung gehalten und werden in Richtung der Gelenkachse gegeneinander gepresst. Weiterhin sind die Gelenkteile eines Gelenks bevorzugt im Verbindungsbereich der einander zugewandten Abschnitte der Kanäle für die plastische Kunststoffmasse durch mindestens eine druck- und temperaturbeständige Dichtung abgedichtet.

Gemäß einer bevorzugten Weiterbildung der Erfindung können die Kanäle, in denen die plastische Kunststoffmasse fließt, innerhalb der Gelenkteile des Gelenks jeweils einen winkelförmigen Verlauf, vorzugsweise jeweils einen etwa rechtwinkligen Verlauf aufweisen. Ein solcher etwa rechtwinkliger Verlauf ergibt sich beispielsweise, wenn ein Abschnitt des Kanals in jeweils einem der Gelenkteile einerseits mit dem Kanal in einem Gelenkarm kommuniziert, welcher rechtswinklig zur Gelenkachse zu dem Gelenk führt und wenn ein weiterer Abschnitt des Kanals innerhalb des Gelenkteils in Richtung der Gelenkachse verläuft, welcher mit einem gleichartigen Abschnitt des Kanals in dem zweiten Gelenkteil dieses Gelenks fluchtet. Es sind dann somit zwei etwa rechtwinklige Kanäle in einem Gelenk vorhanden, die insgesamt eine zweifach abgewinkelte etwa Z-förmige Konfiguration ergeben.

Eine mögliche alternative konstruktive Variante der Erfindung sieht vor, dass mindestens ein Gelenk der gelenkigen Verbindung mindestens ein Gelenkaußenteil umfasst, welches mit einem ersten Gelenkarm verbunden ist, welcher entweder zum Extruderkopf oder zu der Extruderschnecke führt, wobei sich in dem Gelenkarm mindestens ein Kanal für die plastische Kunststoffmasse befindet, wobei das Gelenk weiterhin ein Gelenkinnenteil umfasst, welches von dem Gelenkaußenteil aufgenommen wird und welches mit einem zweiten Gelenkarm der gelenkigen Verbindung verbunden ist, wobei sich in dem Gelenkinnenteil ein Kanal für die plastische Kunststoffmasse befindet, welcher mit mindestens einem Kanal in einem Gelenkarm fluchtet. In diesem Fall kann beispielsweise die gelenkige Verbindung mindestens einen Gelenkarm aufweisen, in dem ein mindestens einmal etwa rechtwinklig abgewinkelter Kanal für die plastische Kunststoffmasse vorgesehen ist, wobei vorzugsweise mindestens ein Gelenkarm einen zweifach abgewinkelten Kanal in Z-Form oder in C-Form oder U-Form aufweist. Es kann bei dieser Variante beispielsweise so sein, dass Gelenkinnenteil und Gelenkaußenteil jeweils im Verbindungsbereich zwischen zwei Gelenkarmen angeordnet sind und je eines davon mit jeweils einem Gelenkarm verbunden ist, wobei der aus einem ersten Gelenkarm kommende Kanal für die plastische Kunststoffmasse sich beispielsweise in dem Gelenkinnenteil fortsetzen kann und dann weiter in einem zweiten Gelenkarm fortsetzen kann. Im Gegensatz zu der oben beschriebenen Variante kann hier der Kanal in dem Gelenkinnenteil geradlinig anstatt winkelförmig verlaufen.

Bei einer bevorzugten konstruktiven Ausführungsvariante der Erfindung ist es so, dass sich der Extruderkopf nur in einer linearen Bewegung gegenüber der Extruderschnecke bewegt, wobei dazu der Antrieb für das Bewirken der Relativbewegung zwischen Extruderkopf und Extrudergehäuse am Extruderkopf angreift und vorzugsweise eine Linearbewegung des Extruderkopfs entlang einer Führung bewirkt wird, wobei mindestens ein Gelenkarm, bevorzugt mindestens zwei Gelenkarme in Schwenkbewegung zwischen dem sich bewegenden Extruderkopf und dem feststehenden Extrudergehäuse mitgenommen werden und wobei die Länge der Gelenkarme auch bei einer Hubbewegung des Extruderkopfs jeweils gleichbleibend ist. Diese Variante kann man wählen, wenn nur ein auf und ab bewegen des Extruderkopfs erforderlich ist und nicht zusätzlich noch eine hin und her Bewegung vorwärts/rückwärts oder seitlich. Der Extruderkopf kann dann beispielsweise an einer festen Halterung, an der sich der Antrieb befindet, entlang seiner Führung auf und ab bewegt werden. Als Antrieb kommt beispielsweise ein motorischer Spindelantrieb oder ein hydraulischer Antrieb in Betracht. Wenn man dabei zwei Gelenkarme mit insgesamt drei Gelenken für die gelenkige Bewegung verwendet, bewegen sich die Gelenkarme beispielsweise so, dass sich bei der Aufwärtsbewegung des Extruderkopfs die Hübe der Gelenkarme addieren und bei der Abwärtsbewegung die Hübe der Gelenkarme subtrahieren oder umgekehrt, je nach Ausgangsposition des Extruderkopfs und relativer Position der Halterung des Extruderkopfs gegenüber der Extruderschnecke.

Es kann wegen der besseren Abdichtung im Bereich der Gelenke notwendig sein, dass es beim Übergang beispielsweise von der Extruderschnecke zu einem Gelenk oder von einem Gelenk zu einem Gelenkarm zu einer Durchmesserreduzierung außen an den Bauteilen kommt. Um dann zu verhindern, dass sich der Kanal für die plastische Kunststoffmasse im Inneren der gelenkigen Verbindung im Querschnitt reduziert, kann man Reduzierstifte im Inneren der Kanäle vorsehen, durch die man einen Kanal mit Ringquerschnitt erzeugt. Wenn man dann den Außendurchmesser des Kanals verringert kann man dies durch Verwendung eines im Durchmesser reduzierten Reduzierstifts im nächstfolgenden Kanalabschnitt ausgleichen und damit zu einem insgesamt gleichbleibenden effektiven Querschnitt des Kanals kommen.

Eine mögliche alternative Variante der Erfindung sieht vor, dass zwischen Extruderkopf und Extrudergehäuse eine mindestens streckenweise flexible Verbindung vorgesehen ist, so dass bei feststehender Position des Extrudergehäuses eine vertikale Relativbewegung des Extruderkopfs gegenüber dem Extruder und gegenüber der Blasformeinrichtung und der Blasform möglich ist. Bei dieser Variante sind somit keine Gelenke im Verbindungsbereich zwischen jeweils starren Armen vorgesehen, sondern die Verbindung zwischen Extruder und Extruderkopf ist mindestens über eine Teilstrecke in sich flexibel. Dies ist dann möglich, wenn für diese Verbindung beispielsweise Schläuche verwendet werden, die ausreichend temperaturbeständig sind, die druckbeständig sind, in der Regel bis zu mehreren hundert bar, die eine geringe Rohrhaftung haben, so dass der Strom der plastischen Kunststoffmasse durch den Schlauch nicht behindert wird und bei denen sich keine Anhaftungen ergeben und deren innere Oberfläche unter den gegebenen Druck- und Temperaturbedingungen ausreichend abriebfest ist. Beispielsweise kommen hier Druckschläuche mit polierten Kanälen in Betracht, für deren Aufbau in der Regel Verbundmaterialien aus den Werkstoffen Kunststoff/Metall oder faserverstärkter Kunststoff/Metall mit einer Innenschicht mit Teflon verwendet werden können.

Gegenstand der vorliegenden Erfindung ist weiterhin eine Extrudereinrichtung mit Extruderschnecke und wenigstens einem der Extruderschnecke zugeordneten Extruderkopf (Schlauchkopf), insbesondere für die Verwendung in einem Blasformsystem oder einer anderen Anlage, die zur Verarbeitung einer plastischen Kunststoffmasse in einem kunststofftechnischen Formgebungsverfahren dient, wobei erfindungsgemäß zwischen Extruderkopf und Extrudergehäuse eine gelenkige Verbindung mit mindestens zwei Gelenken vorgesehen ist, so dass bei feststehender Position des Extrudergehäuses eine vertikale Relativbewegung des Extruderkopfs gegenüber dem Extrudergehäuse möglich ist. Grundsätzlich kann die erfindungsgemäße Extrudereinrichtung auch ohne ein Blasformsystem verwendet werden, beispielsweise in einem anderen kunststofftechnischen Formgebungsverfahren, bei dem man einen Extruder einsetzt, um eine plastische Kunststoffmasse zu verarbeiten und bei dem man einen gegenüber der Extruderschnecke beweglichen Extruderkopf benötigt.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte perspektivische Teilansicht einer erfindungsgemäßen Extrudereinrichtung;
Figur 2 eine entsprechende schematisch vereinfachte perspektivische Ansicht der Extrudereinrichtung von Figur 1 in einer anderen Position des Extruderkopfs;
Figur 3 eine schematisch vereinfachte Schnittansicht durch eine Extrudereinrichtung von Figur 1;
Figur 4 eine schematisch vereinfachte perspektivische Ansicht eines Ausschnitts einer Extrudereinrichtung gemäß einer alternativen Variante der vorliegenden Erfindung;
Figur 5 eine entsprechende schematisch vereinfachte perspektivische Ansicht der Extrudereinrichtung von Figur 4 in einer anderen Position des Extruderkopfs;
Figur 6 eine schematisch vereinfachte Seitenansicht einer Extrudereinrichtung, die ähnlich aufgebaut ist wie diejenige in Figur 4, wobei der Extruderkopf in einer ersten Arbeitsphase während eines Blasformzyklus dargestellt ist;
Figur 7 eine weitere schematisch vereinfachte Seitenansicht der Extrudereinrichtung von Figur 6, wobei der Extruderkopf in einer zweiten Arbeitsphase während eines Blasformzyklus dargestellt ist.

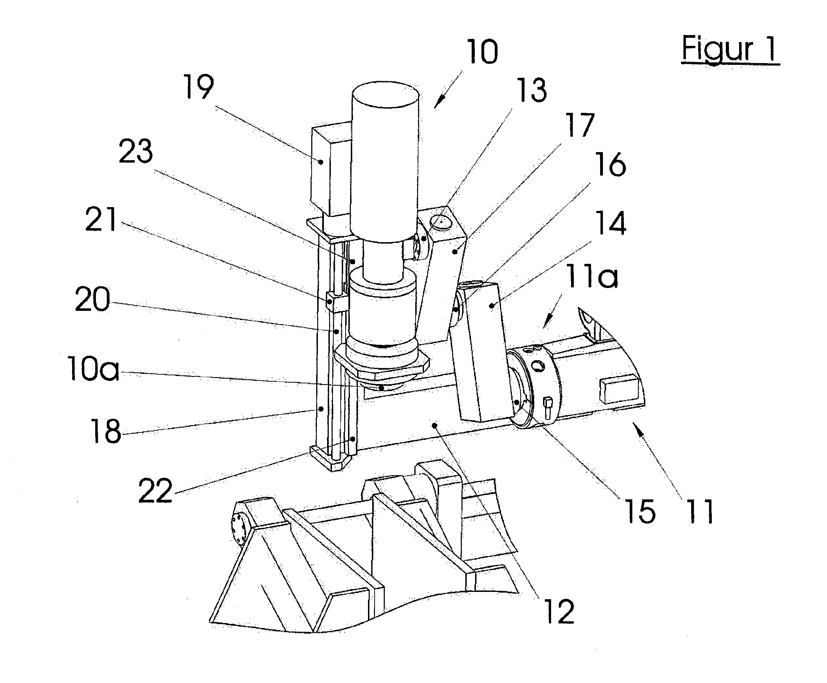

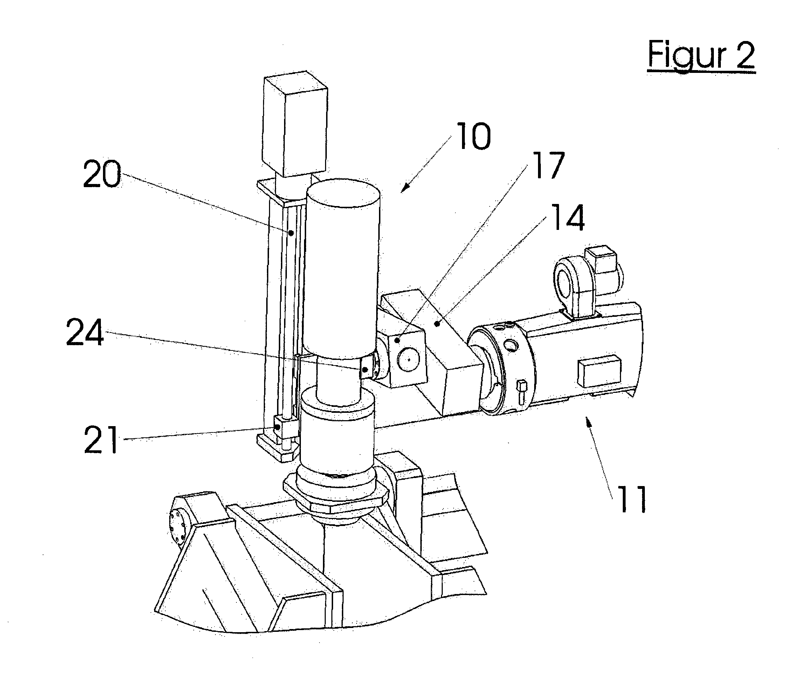

Zunächst wird auf die Figuren 1 und 2 Bezug genommen und anhand dieser wird ein mögliches Ausführungsbeispiel der vorliegenden Erfindung näher erläutert. Es ist hier nur ein Teil der erfindungsgemäßen Extrudereinrichtung dargestellt und die Darstellung ist schematisch vereinfacht, wobei hier nur diejenigen Bauteile dargestellt sind, die im Rahmen der vorliegenden Erfindung von Bedeutung sind. Links in Figur 1 sieht man den Extruderkopf 10 und rechts sieht man den vorderen Bereich des Extrudergehäuses 11, in dem sich unter anderem die Extruderschnecke befindet. Der Extruderkopf ist ein langgestrecktes in seinem Gehäuse außen weitgehend zylindrisches Bauteil mit im Durchmesser reduzierten Abschnitten. Im Inneren des Extruderkopfs 10 befindet sich ein Kanal, durch den die plastische Kunststoffmasse, vom Extrudergehäuse kommend, strömen kann, um am unteren Ende 10 a des Extruderkopfs in Form eines noch plastischen Schlauchs auszutreten. In der Regel ist der Extruderkopf 10 im Betrieb vertikal ausgerichtet und der Hauptkanal erstreckt sich somit im Inneren des Extruderkopfs in axialer Richtung und in der Zeichnung von oben nach unten. Der Eintritt der plastischen Kunststoffmasse in den Extruderkopf 10 ist in dem Ausführungsbeispiel etwa in dessen Mitte (in der vertikalen Erstreckung gesehen) und zwar dort, wo der Gelenkarm 17 mit dem Extruderkopf 10 gelenkig verbunden ist. Zwischen diesem Gelenkarm 17 und dem Extruderkopf 10 befindet sich ein Gelenk 13 im Sinne der vorliegenden Erfindung.

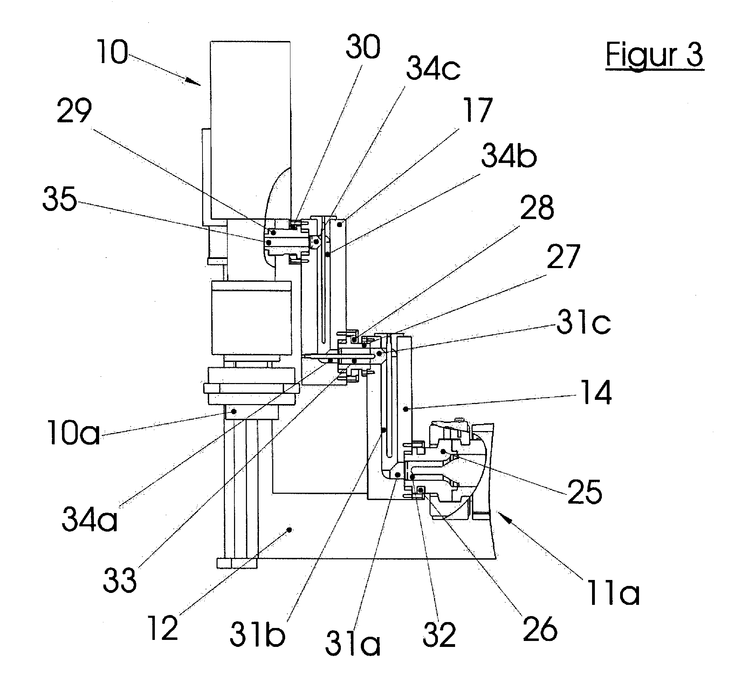

Anhand von Figur 1 und Figur 3 wird nachfolgend die gesamte gelenkige Verbindung zwischen Extruderkopf 10 und Extrudergehäuse 11 erläutert. Dargestellt ist der vordere Bereich 11 a des Extrudergehäuses 11, innerhalb dessen sich die Extruderschnecke befindet. Man sieht, dass die Achse des Extrudergehäuses horizontal verläuft und somit in einem rechten Winkel zur vertikalen Achse des Gehäuses des Extruderkopfs 10. Zwischen dem vorderen Ende 11 a des Extrudergehäuses 11 und einem ersten schwenkbaren Gelenkarm 14 ist ein erstes Gelenk 15 angeordnet, so dass sich bei feststehendem Extrudergehäuse 11 der Gelenkarm 14 um die Achse des ersten Gelenks 15 drehen kann. Etwa an seinem dem ersten Gelenk 15 und dem Extrudergehäuse 11 abgewandten Ende ist der erste Gelenkarm 14 über ein zweites Gelenk 16 mit einem zweiten Gelenkarm 17 schwenkbar verbunden. Dieser zweite Gelenkarm 17 ist wiederum über ein drittes Gelenk, nämlich das Gelenk 13, schwenkbar mit dem Extruderkopf 10 verbunden.

Für die Halterung des von der Extruderschnecke 10 entkoppelten Extruderkopfs 11 ist ein horizontaler Träger 12 vorgesehen, der mit einem hier nicht dargestellten Maschinengestell verbunden ist. Am vorderen Ende des Trägers 12 befindet sich ein mit diesem in einem Winkel verbundener, sich nach oben hin erstreckender weiterer Träger 18, an dem der Extruderkopf 10 in vertikaler Richtung beweglich angebracht ist. Der Extruderkopf 10 kann somit auf und ab bewegt werden. Dazu ist ein Antrieb vorgesehen, beispielsweise ein Motor 19 mit einer Spindel 20, so dass der Extruderkopf über eine Spindelmutter 21 in vertikaler Richtung verfahren werden kann. Dabei ist eine Führung für die lineare Bewegung des Extruderkopfs 10 entlang des Trägers 18 vorgesehen, mit einer Führungsstange 22 und einem auf dieser verschiebbar geführten Führungselement 23, welches mit dem Extruderkopf 10 fest verbunden ist.

Die Kinematik der Bewegung des Extruderkopfs 10 und der Gelenkarme 14, 17 wird nachfolgend unter Bezugnahme auf die Figuren 1 und 2 näher erläutert. Während Figur 1 den Extruderkopf 10 in einer oberen Position zeigt, ist dieser in Figur 2 in einer unteren Position dargestellt. Bei Betätigung des Motors 19 wird die Spindel 20 angetrieben und die Spindelmutter 21 fährt aus der Position gemäß Figur 1 nach unten in die in Figur 2 dargestellte Position, wobei das Führungselement 23 auf der Führungsstange 22 geführt wird. Die Position des Extrudergehäuses 11 bleibt dabei unverändert. Um dies zu ermöglichen ist die gelenkige Verbindung zwischen Extruderkopf 10 und Extrudergehäuse 11 vorgesehen, welche die beiden Gelenkarme 14, 17 und die drei Gelenke 15, 16, 13 umfasst. Der Vergleich zwischen Figur 2 und Figur 1 zeigt, dass beim nach unten Fahren des Extruderkopfs 10 der erste Gelenkarm 14 um die Achse des ersten Gelenks 15 schwenkt, und zwar, wenn man auf das Extrudergehäuse 11 in Richtung der Extruderachse schaut, im Gegenuhrzeigersinn. Gleichzeitig schwenkt bei dieser Absenkbewegung des Extruderkopfs 10 der zweite Gelenkarm 17 um die Achse des zweiten Gelenks 16 im entgegengesetzten Drehsinn wie der erste Gelenkarm 14, also im Uhrzeigersinn. Weiterhin schwenkt der zweite Gelenkarm 17 gegenüber dem Extruderkopf 10 um die Achse des dritten Gelenks 13. Insgesamt gesehen ergibt sich somit ausgehend von der oberen Position des Extruderkopfs 10 gemäß Figur 1 in die untere Position von Figur 2 quasi ein Einfalten der Gelenkarmverbindung, bei der sich der Gesamthub der beiden Gelenkarme 14, 17 verringert, denn durch dessen Schwenken im entgegengesetzten Drehsinn kompensiert sich deren Hub. Bei maximalem Hub würden die beiden Gelenkarme 14, 17 eine annähernd vertikale Position einnehmen, in der sich ihr Hub addiert, während bei minimalem Hub beide eine fast horizontale Position einnehmen, in der sie sich quer zur Längserstreckung des Extruderkopfs 10 erstrecken.

Der Verbindungsarm 24 zwischen dem Extruderkopf 10 und dem dritten Gelenk 13 und somit dem zweiten Gelenkarm 17 bewegt sich wie der Vergleich der Figuren 1 und 2 zeigt nach unten und nähert sich in einer unteren Position einer gedachten Verlängerung der Achse des Extrudergehäuses 11. Der gesamte Hub des Extruderkopfs 10 wird natürlich bestimmt durch den Hub der Spindelmutter 21 auf der Spindel 20. Die konstruktive Ausführung der gelenkigen Verbindung zwischen Extruderkopf 10 und Extrudergehäuse 11 ist über weite Bereiche variierbar, indem beispielsweise die Anzahl der Gelenke und/oder der Gelenkarme variiert wird. Man kann alternativ zu der in den Figuren 1 und 2 gezeigten Variante auch anstelle einer geführten linearen auf und ab Bewegung des Extruderkopfs 10 vorsehen, dass dieser frei schwenken kann, das heißt, dass der Extruderkopf auch seitliche Bewegungen durchführen kann, so dass für manche Anwendungen ein zusätzlicher Bewegungsfreiheitsgrad gegeben ist.

Der Aufbau der Gelenkarme und Gelenke wird nachfolgend anhand der Schnittdarstellung von Figur 3 näher erläutert. In Figur 3 sind das vordere Ende 11 a des Extrudergehäuses, die beiden Gelenkarme 14, 17, die drei Gelenke 15, 16, 13 sowie die Anbindung an den Extruderkopf 10 jeweils im Längsschnitt dargestellt. Das Gelenk 15 umfasst ein Gelenkinnenteil 25 und ein Gelenkaußenteil 26, die gegeneinander verdrehbar gelagert sind. Das Gelenkinnenteil 25 ist fest mit dem vorderen Ende 11 a des Extrudergehäuses verbunden und das Gelenkaußenteil 26 ist fest mit dem ersten Gelenkarm 14 verbunden, so dass der Gelenkarm 14 gegenüber dem Gelenkinnenteil 25 und dem Extrudergehäuse 1 schwenkbar ist. Das zweite Gelenk 16 ist ähnlich aufgebaut, denn es umfasst ein Gelenkinnenteil 27, welches fest mit einem oberen Ende des Gelenkarms 14 verbunden ist und ein Gelenkaußenteil 28, welches fest mit dem unteren Ende des zweiten Gelenkarms 17 verbunden ist. Gelenkinnenteil 27 und Gelenkaußenteil 28 sind gegeneinander um die Achse des Gelenks 16 drehbar gelagert. Das dritte Gelenk 13 ist wiederum ähnlich aufgebaut und es umfasst ein Gelenkinnenteil 29 und ein gegenüber diesem drehbares Gelenkaußenteil 30. Das Gelenkaußenteil 30 ist fest mit dem oberen Ende des Gelenkarms 17 verbunden, während das Gelenkinnenteil 29 mit dem Extruderkopf 10 verbunden ist.

Das dritte Gelenk mit dem Gelenkaußenteil 30 und dem Gelenkinnenteil 29 befinden sich an dem einen Ende des zweiten Gelenkarms 17, während sich Gelenkaußenteil 28 und Gelenkinnenteil 27 des zweiten Gelenks an dem anderen Ende des zweiten Gelenkarms 17 befinden. Das zweite Gelenk verbindet das eine Ende des zweiten Gelenkarms 17 mit dem einen Ende des ersten Gelenkarms 14, während dessen anderes Ende wiederum über Gelenkaußenteil 26 und Gelenkinnenteil 25 mit dem vorderen Endbereich 11 a des Extrudergehäuses verbunden ist. Die Achsen der Gelenke erstrecken sich dabei jeweils rechtwinklig zu der jeweiligen Längserstreckung der beiden Gelenkarme 14, 17.

Damit die heiße plastische Kunststoffmasse vom Extrudergehäuse 11 a bis in den Extruderkopf 10 fließen kann, sind in den jeweiligen Gelenkinnenteilen und in den Gelenkarmen Kanäle vorgesehen, die jeweils miteinander kommunizieren und deren freier Querschnitt auch bei einer Schwenkbewegung der Gelenkarme nicht beeinträchtigt wird. Die Schmelze strömt vom Extrudergehäuse 11 kommend unter Druck in einen Z-förmigen Kanal im Inneren des Gelenkarms 14, dessen einer kurzer unterer Abschnitt 31 a mit dem Kanal 32 in dem Gelenkinnenteil 25 fluchtet. Daran schließt sich ein langgestreckter Abschnitt 31 b des Z-förmigen Kanals an, welcher im Inneren des Gelenkarms 14 in Richtung dessen Längserstreckung verläuft. Daran schließt sich wiederum ein kurzer rechtwinklig abgewinkelter Kanalabschnitt 31 c an. Da letzterer in die entgegengesetzte Richtung abgewinkelt ist wie der kurze Abschnitt 31 a am anderen Ende des Gelenkarms 14, ergibt sich insgesamt für den Kanal in diesem Gelenkarm eine Z-Form. Mit dem kurzen Kanalabschnitt 31 c fluchtet der Kanal 33 im Inneren des Gelenkinnenteils 27, wobei sich am anderen Ende dieses Kanals 33 ein kurzer Kanalabschnitt 34 a in dem Gelenkarm 17 anschließt, welcher ebenfalls axial mit dem Kanal 33 fluchtet. Auch der Kanal in dem Gelenkarm 17 ist insgesamt Z-förmig mit drei Abschnitten 34 a, 34 b, 34 c, die analog angeordnet sind wie zuvor bei den Kanälen 31 a, 31 b, 31 c des Gelenkarms 14 beschrieben. Der kurze Kanalabschnitt 34 c fluchtet mit einem Kanal 35 in dem Gelenkinnenteil 29, welcher dann in das Innere des Extruderkopfs führt.

Insgesamt wird somit die Schmelze von der Extruderschnecke durch das Gelenkinnenteil 25 über den ersten Z-förmigen Kanal 31 des ersten Gelenkarms 14, durch das Gelenkinnenteil 27, durch den zweiten Z-förmigen Kanal 34 und durch das Gelenkinnenteil 29 in den Extruderkopf geleitet, wobei die gesamte gelenkige Verbindung zwischen Extrudergehäuse 11 und Extruderkopf 10 so ausgelegt ist, dass bei Schwenkbewegungen der Gelenkarme 14, 17 keine Querschnittsverengung in den Kanälen auftritt. Der effektive Querschnitt der aufeinanderfolgenden Abschnitte des gesamten Schmelzekanals kann somit gleichbleibend gehalten werden, was für einen Erhalt eines ungestörten Schmelzeflusses wichtig ist.

Bei der zuvor unter Bezugnahme auf die Figuren 1 bis 3 beschriebenen Variante der Erfindung erfolgt die Anbindung des Gelenkarmssystems an das Extrudergehäuse 11 derart, dass sich das erste Gelenk 15 stirnseitig am vorderen Ende 11 a des Extrudergehäuses befindet und sich der erste Gelenkarm 14 an dem ersten Gelenk 15 um eine Gelenkachse dreht, die etwa der Achse des Extrudergehäuses 11 entspricht. Die Achse des Gelenks 16 am anderen, dem Extrudergehäuse 11 abgewandten Ende des Gelenkarms 14 verläuft parallel zur Achse des ersten Gelenks 15 ebenso wie die Achse des dritten Gelenks 13, über das der zweite Gelenkarm 17 am Extruderkopf 10 angebunden ist, parallel zu den Achsen der beiden anderen Gelenke 16 und 15 verläuft. Man sieht in Figur 1, dass die Schwenkebene des ersten Gelenkarms 14 bei seiner Schwenkbewegung um die Achse des Gelenks 15 vor dem vorderen Ende des Extrudergehäuses 11 liegt, während die Schwenkebene des zweiten Gelenkarms 17 parallel zur Schwenkebene des ersten Gelenkarms 14 liegt, da der zweite Gelenkarm 17 in der Seitenansicht auf das Extrudergehäuse 11 gesehen zu dem ersten Gelenkarm 14 versetzt liegt und zwar in Richtung auf den Extruderkopf 10 hin versetzt. Betrachtet man die Seitenansicht dieser Anordnung entsprechend der Darstellung gemäß Figur 3, dann befindet sich die Schwenkebene des ersten Gelenkarms 14 vor dem vorderen Ende 11 a des Extrudergehäuses, versetzt dazu folgt zum Extruderkopf 10 hin die Schwenkebene des zweiten Gelenkarms 17 und wiederum versetzt dazu folgt die Bewegungsebene, in der sich der Extruderkopf bei seiner Hubbewegung auf und ab bewegt. Bei dieser Hubbewegung des Extruderkopfs 17 schwenken die Gelenkarm um die Gelenke an ihren beiden Enden, die Länge der beiden Gelenkarme 14, 17 bleibt dabei aber immer gleich, ebenso wie der seitliche Abstand der Bewegungsachse des Extruderkopfs bei seiner Hubbewegung zum Extrudergehäuse 11 immer gleich bleibt, da sich der Extruderkopf linear in einer geführten Bewegung auf und ab bewegt. Außerdem behält das Extrudergehäuse 11 bei dieser Hubbewegung des Extruderkopfs 10 seine Position bei, das heißt das Extrudergehäuse kippt weder noch verschiebt es sich.

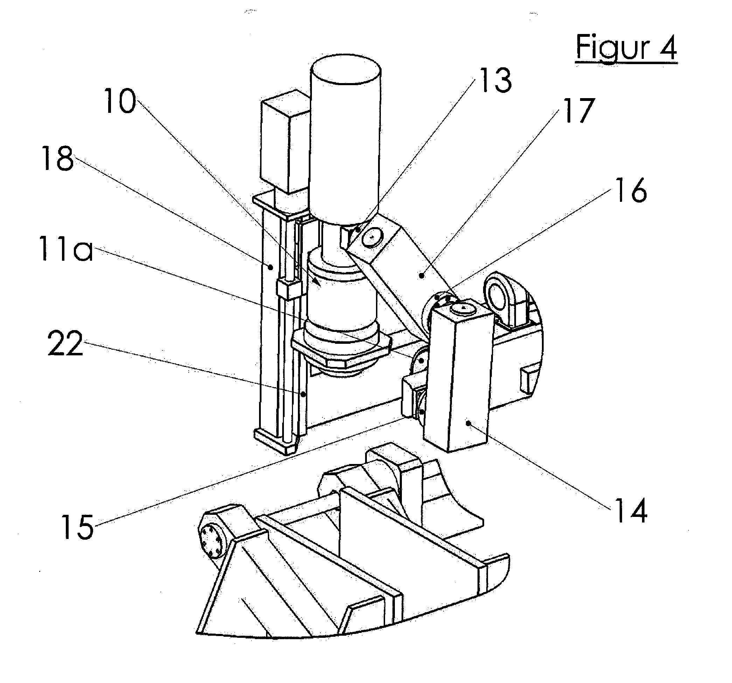

Figur 4 zeigt nun eine zweite etwas abgewandelte Variante, bei der die Kinematik der Gelenkarme 14, 17 bei der Hubbewegung im Prinzip die gleiche ist wie bei dem zuvor unter Bezugnahme auf die Figuren 1 bis 3 beschriebenen Ausführungsbeispiel. Jedoch ist hier die Anbindung des ersten Gelenkarms 14 an das vordere Ende des Extrudergehäuses 11 a etwas anders gelöst. Dieser ist seitlich an dem Extrudergehäuse 11 angebracht, so dass sich in diesem Fall die Achse des ersten Gelenks 15 etwa rechtwinklig zur Achse des Extrudergehäuses 11 erstreckt. Die Achsen der beiden anderen Gelenke 16, 13 verlaufen jedoch auch hier parallel zur Achse des ersten Gelenks 15 und der Extruderkopf bewegt sich in rein linearer Bewegung entlang einer Führung 22 an dem Träger 18 vertikal auf und ab. Die Schwenkebene des zweiten Gelenkarms 17 liegt auch hier seitlich versetzt und parallel zur Schwenkebene des ersten Gelenkarms 14. Eine weitere Abweichung ergibt sich in dem Ausführungsbeispiel gemäß Figur 4 zur Variante von Figur 3, da sich der erste untere Gelenkarm 14 an der dem Extruderkopf abgewandten Seite des Extrudergehäuses 11 befindet und somit der Extruderkopf 10 selbst an der anderen Seite des Extrudergehäuses 11 liegt als der erste Gelenkarm 14. Dies ergibt sich daraus, dass anders als in Figur 3 die beiden Gelenkarme 14, 17 in der Seitenansicht gesehen nicht eine doppelt Z-förmige Anordnung bilden, sondern das erste Gelenk 15, mit dem der erste Gelenkarm 14 an das Extrudergehäuse 11 angebunden ist, auf der gleichen Seite des Gelenkarms 14 liegt wie das zweite Gelenk 16, welches das andere Ende des ersten Gelenkarms 14 mit dem zweiten Gelenkarm 17 verbindet. Dadurch ergibt sich für den ersten Gelenkarm 14 in der Seitenansicht gesehen eine U-förmige Anordnung und nur für den zweiten Gelenkarm 17 ergibt sich eine Z-förmige Anordnung, da dort beide Gelenke 16, 13 an gegenüberliegenden Seiten des Gelenkarms 17 liegen. Diese etwas andere Anordnung der beiden Gelenke 15, 16 nur an dem unteren Gelenkarm 14 verglichen mit Figur 3 ändert jedoch nichts an der prinzipiellen Kinematik der Gelenkarmanordnung bei der Hubbewegung des Extruderkopfs 10.

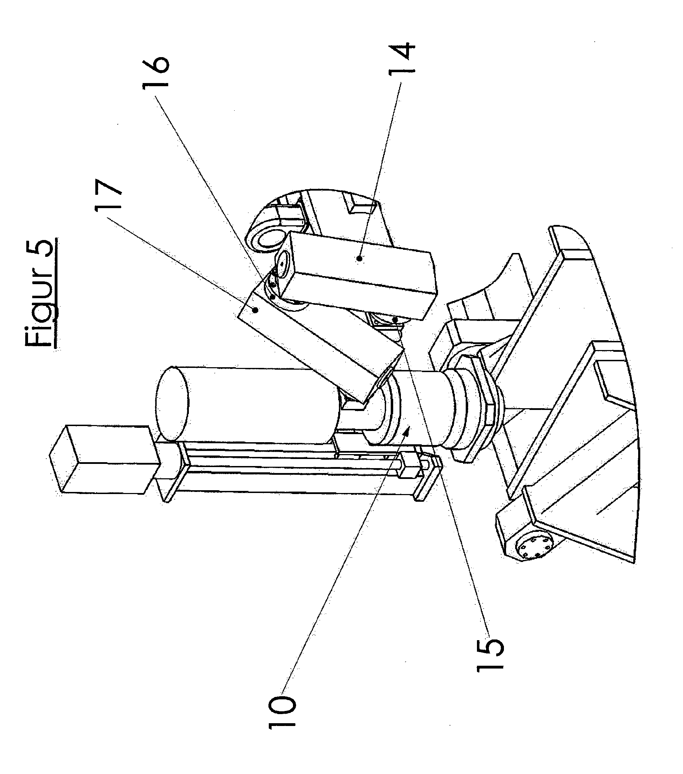

Figur 5 zeigt die Ausführungsvariante von Figur 4 in einer anderen Hubposition als in Figur 4, nämlich in einer etwa mittleren Hubposition. Man erkennt in Figur 5 gut, dass sich in einer solchen mittleren Position, in der sich der Extruderkopf in etwa in Höhe des Extrudergehäuses 11 befindet, die Hübe der beiden Gelenkarme 14, 17 quasi subtrahieren. Während der erste Gelenkarm 14 vom Extrudergehäuse ausgehend nach oben hin gerichtet ist, ist der zweite Gelenkarm 17 von dem beide Gelenkarme 14, 17 verbindenden zweiten Gelenk 16 ausgehend nach unten hin ausgerichtet, so dass sich die Hübe beider Gelenkarme 14, 17 quasi aufheben, anders als in der Position des Extruderkopfs 10 gemäß Figur 4. Bewegt sich der Extruderkopf 10 aus einer oberen Position gemäß Figur 4 linear nach unten hin, dass schwenken die beiden Gelenkarme 14, 17 derart, dass zunächst der über das Gelenk 13 an den Extruderkopf 10 angebundene Gelenkarm 17 in der Zeichnung im Gegenuhrzeigersinn nach unten hin schwenkt und sich die beiden Gelenkarme 14, 17 quasi einrollen. Erst bei einer weiteren Hubbewegung des Extruderkopfs ausgehend von Figur 5 nach unten hin wird der erste Gelenkarm 14 über sein Gelenk 16 am oberen Ende mitgenommen und schwenkt dann um die Achse des ersten Gelenks 15, so dass sich dann die Anordnung der beiden Gelenkarme 14, 17 wieder streckt, bis in einer untersten Position des Extruderkopfs 10 eine Anordnung erreicht ist, in der sich die beiden Gelenkarme in ihrer Hubstrecke vom Extrudergehäuses aus nach unten hin addieren.

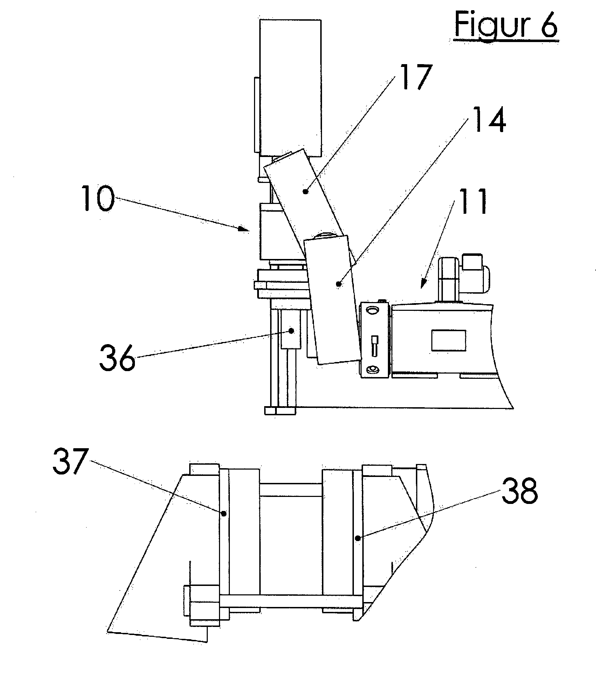

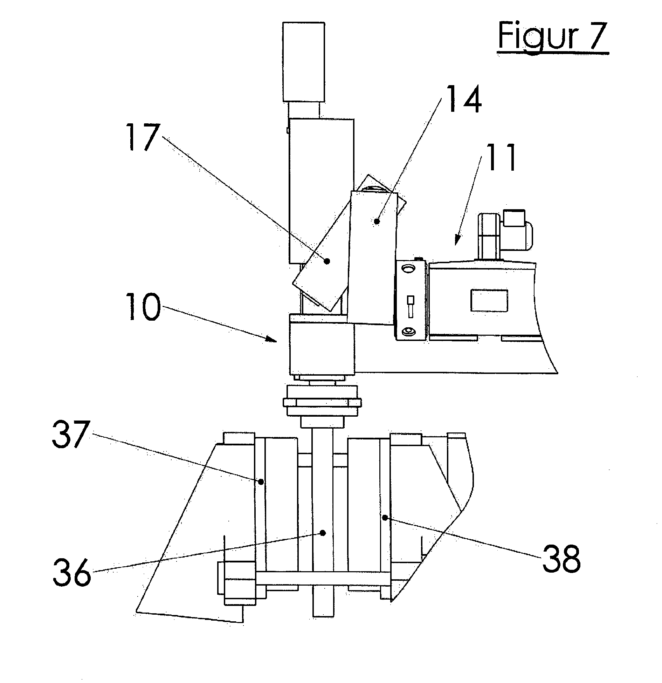

Nachfolgend wird auf die Figuren 6 und Bezug genommen und anhand dieser wird das Arbeiten eines erfindungsgemäß in der Höhe verfahrbaren Extruderkopfs während des Blasformzyklus näher erläutert. Figur 6 zeigt eine schematisch vereinfachte Seitenansicht einer Extrudereinrichtung, die ähnlich aufgebaut ist wie diejenige in Figur 4, wobei der Extruderkopf 10 in einer ersten Arbeitsphase während eines Blasformzyklus dargestellt ist. In Figur 7 ist der Extruderkopf 10 der gleichen Extrudereinrichtung in einer zweiten Arbeitsphase eines Blasformzyklus dargestellt. Man sieht, dass sich in Figur 6 der Extruderkopf 10 in einer oberen Hubposition relativ zum Extrudergehäuse 11 befindet, wobei die Gelenkachsen der beiden in hintereinander liegenden Schwenkebenen schwenkenden Gelenkarme 14, 17, in deren Gelenkachsenrichtung man schaut, senkrecht zur Zeichenebene verlaufen. Der Extruderkopf 10 bewegt sich bei seiner Hubbewegung rein vertikal auf und ab, ohne dabei seinen seitlichen Abstand relativ zum vorderen Ende des Extrudergehäuses 11 zu verändern. In Figur 6 beginnt der Extruderkopf 10 einen Schlauch 36 (Vorformling) für den nachfolgenden Blasformzyklus auszustossen. Schematisch sind unterhalb des Extruderkopfs 10 Teile der Blasform mit den beiden Formaufspannplatten 37, 38 dargestellt an denen jeweils eine Hälfte der Blasform angebracht ist. Die Blasform ist hier in geöffneter Position gezeichnet, so dass sie mit einem Vorformling beschickt werden kann. Die beiden Formaufspannplatten 37, 38 sind gegeneinander verfahrbar jeweils an Jochen befestigt, um die Blasform zu schließen oder zu öffnen, was in der Blasformtechnik an sich bekannt ist und daher hier nicht näher erläutert wird.

In Figur 7 ist nun der Extruderkopf 10 in einer späteren Phase des gleichen Blasformzyklus dargestellt. Die beiden Blasformhälften sind nach wie vor geöffnet. Der Schlauch 36 wurde vom Extruderkopf 10 weiter ausgestossen. Aufgrund der erfindungsgemäßen Möglichkeit, den Extruderkopf während des Ausstoßvorgangs linear in vertikaler Richtung zu verfahren, ohne dabei die relative Position des Extruderkopfs seitlich zum Extrudergehäuse 11 zu verändern, kann der Extruderkopf 10 noch während er den Schlauch 36 ausstößt in eine tiefere Position fahren, so dass der Schlauch 36 zwischen die beiden Blasformhälften positioniert wird. Durch Vergleich der beiden Zeichnungen Figur 6 und 7 ist gut erkennbar, dass der Schlauch 36 in Figur 7 bereits erheblich länger ist als in Figur 6. Der Vorgang des Ausstoßens des Schlauchs 36 nimmt im Blasformzyklus einige Zeit in Anspruch, in der bei herkömmlichen Systemen keine Verfahroperationen des Extruderkopfs durchgeführt werden können. Bei dem erfindungsgemäßen Blasformsystem ist es jedoch so, dass durch die Hubbewegung des Extruderkopfs 10 der Weg, den die Schmelze vom vorderen Ende der Extruderschnecke im Extrudergehäuse 11 durch die entsprechenden Kanäle in den Gelenkarmen 14, 17 (siehe auch Figur 3) bis zur Ausstoßdüse des Extruderkopfs 10 zurücklegt, nicht verändert wird. Dadurch ist ein gleichmäßiger Extrudatstrom durch die Gelenkarme möglich.

Vergleicht man die Hubposition des Extruderkopfs 10 in Figur 6 mit derjenigen in Figur 7, wird deutlich, dass der in einer (in Achsrichtung gesehen) hinteren Ebene schwenkende Gelenkarm 17 beim Verfahren des Extruderkopfs 17 nach unten aus der Position von Figur 6 in diejenige von Figur 7 in etwa einen Schwenkwinkel von 120 ° im Gegenuhrzeigersinn vollzogen hat, während dabei der in einer vorderen Schwenkebene schwenkende Gelenkarm 14 seine Winkelposition nur wenig verändert hat, er ist von der Position gemäß Figur 6 in diejenige von Figur 7 geringfügig im Uhrzeigersinn geschwenkt.

Der Schwenkarm 17 ist mit seinem einen Ende gelenkig am Extruderkopf 10 angebracht, mit seinem anderen Ende ist er mit einem Ende des anderen Gelenkarms 14 verbunden. Dieser ist wiederum mit seinem anderen Ende am Extrudergehäuse 11 gelenkig angebracht. Bei einer Hubbewegung des Extruderkopfs 10 bewegt sich das mit diesem gelenkig verbundene Ende des Gelenkarms 17 ebenso wie der Extruderkopfs selbst auf einer linearen Bahn in vertikaler Richtung auf und ab. Der Anlenkpunkt des ersten Gelenkarms 14 am Extrudergehäuse 11 ist fix, verändert also seine Position beim Hub des Extruderkopfs 10 nicht. Der zweite Gelenkarm 17 wird beim Absenken des Extruderkopfs 10-wie dies beim Verfahren aus der Position gemäß Figur 6 in diejenige von Figur 7 geschieht-von dem Extruderkopf 10 mitgenommen und schiebt dabei das dem Extrudergehäuse 11 abgewandte Ende des ersten Gelenkarms 14 zu Beginn der Hubbewegung in Richtung Extrudergehäuse 11. In Figur 7 subtrahieren sich die Hübe der beiden Gelenkarme 14, 17, während sie sich in Figur 6 addieren. Wenn sich der Extruderkopf 10 aus der Position in Figur 7 weiter nach unten hin bewegt, wird irgendwann ein Punkt erreicht, an dem erste Gelenkarm 14 von dem zweiten Gelenkarm 17 mitgenommen (gezogen) wird und dann im Gegenuhrzeigersinn schwenkt, so dass sich die Hübe beider Gelenkarme irgendwann wieder addieren, jedoch vom Extrudedergehäuse 11 aus gesehen anders als in Figur 6 nach unten hin.

Das erste Gelenk 15 (siehe Figur 1) ist das Gelenk, mit dem das eine Ende des ersten Gelenkarms 14 am Extruderkopf 10 angelenkt ist. Das zweite Gelenk 16 (siehe Figur 1) ist dasjenige Gelenk, welches die beiden Gelenkarme 14, 17 miteinander verbindet. Das dritte Gelenk 13 (siehe Figur 1) ist dasjenige, über das der zweite Gelenkarm 17 am Extruderkopf 10 gelenkig angebunden ist. Aufgrund der erfindungsgemäßen konstruktiven Lösung gemäß den Figuren 6 und 7 bleibt bei der Hubbewegung des Extruderkopfs 10 der Abstand der vertikalen Linie, auf der sich die Gelenkachse des dritten Gelenks 13 bewegt zu einer gedachten vertikalen Linie durch den Kreuzungspunkt der Gelenkachse des ersten Gelenks 15 mit der Extruderachse immer gleich, da ja der erste Gelenkarm 14 am Extrudergehäuse angelenkt ist und letzteres bei Hubbewegung des Extruderkopfs 10 seine Position beibehält. In der Ausführungsvariante gemäß Figur 1 ist die Kinematik im Prinzip ähnlich, nur mit dem Unterschied, dass hier die Achse des ersten Gelenks 15 mit der Achse des Extrudergehäuses 11 zusammenfällt, aufgrund der etwas anderen Anbindung des ersten Gelenkarms 14 an das Extrudergehäuse 11. In Figur 1 verläuft die Achse des dritten Gelenks parallel zur Achse des Extrudergehäuses 11 und außerdem senkrecht zu einer vertikalen Linie durch die Mittelachse des Extruderkopfs, entlang derer letzterer sich beim Hub bewegt. Der Abstand dieser vertikalen Linie zum vorderen Ende des Extrudergehäuses ist fix, da sich letzteres ja beim Hub des Extruderkopfs 10 nicht bewegt und da Extruderkopf selbst eine rein vertikale Hubbewegung vollführt und sich nicht auf einer Kreislinie bewegt wie bei Verwendung bekannter Gelenkarmsysteme.

### Bezugszeichenliste

- 10: Extruderkopf
- 10 a: unteres Ende des Extruderkopfs
- 11: Extrudergehäuse
- 11 a: vorderes Ende des Extrudergehäuses
- 12: Träger
- 13: drittes Gelenk
- 14: erster Gelenkarm
- 15: erstes Gelenk
- 16: zweites Gelenk
- 17: zweiter Gelenkarm
- 18: Träger
- 19: Motor
- 20: Spindel
- 21: Spindelmutter
- 22: Führungsstange
- 23: Führungselement
- 24: Verbindungsarm
- 25: Gelenkinnenteil
- 26: Gelenkaußenteil
- 27: Gelenkinnenteil
- 28: Gelenkaußenteil
- 29: Gelenkinnenteil
- 30: Gelenkaußenteil
- 31: Schmelzekanal mit den Abschnitten
- 31a, 31b und 31c 32: Kanal
- 33: Kanal
- 34: Schmelzekanal mit den Abschnitten
- 34a, 34b und 34c 35: Kanal
- 36: Schlauch, Vorformling
- 37: Formaufspannplatte
- 38: Formaufspannplatte

## Patentansprüche

1. Blasformsystem zur Herstellung von Hohlkörpern durch Blasformen umfassend wenigstens eine Extrudereinrichtung mit Extruderschnecke in einem Extrudergehäuse, wenigstens einen der Extruderschnecke zugeordneten Extruderkopf (Schlauchkopf) sowie wenigstens eine Blasformeinrichtung mit wenigstens einer Blasform,
wobei zwischen Extruderkopf (10) und Extrudergehäuse (11) eine gelenkige Verbindung mit mindestens zwei Gelenken (13, 15, 16) vorgesehen ist, so dass bei feststehender Position des Extrudergehäuses (11) eine vertikale Relativbewegung des Extruderkopfs (10) gegenüber dem Extrudergehäuse sowie gegenüber der Blasformeinrichtung und der Blasform möglich ist, wobei der Extruderkopf (10) über ein Gelenkarmsystem (14, 17) mit dem vorderen Bereich des Extrudergehäuses (11) verbunden ist, welches mindestens einen ersten gelenkig mit dem Extrudergehäuse verbundenen Gelenkarm (14) umfasst, sowie mindestens einen zweiten Gelenkarm (17) der mit dem ersten Gelenkarm gelenkig verbunden ist und an dessen einem Ende der Extruderkopf (10) angebracht ist, **dadurch gekennzeichnet, dass** der erste Gelenkarm (14) und der zweite Gelenkarm (17) geeignet sind, so zu schwenken, dass sich ihre Hübe je nach Drehstellung addieren oder subtrahieren und dass die Gelenkachsen der Gelenkarme (14, 17) zueinander parallel verlaufen.

2. Blasformsystem nach Anspruch 1 oder 2, **dadurch gekennzeichnet, dass** zwischen Extruderkopf (10) und Extrudergehäuse (11) eine gelenkige Verbindung mit mindestens drei Gelenken (13, 15, 16) vorgesehen ist, deren Gelenkachsen jeweils zueinander parallel verlaufen, wobei bei einer Hubbewegung des Extruderkopfs (10) die Länge des ersten Gelenkarms (14) und des zweiten Gelenkarms (17) jeweils unveränderlich ist und wobei die Schwenkebene des zweiten Gelenkarms (17) parallel versetzt zur Schwenkebene des ersten Gelenkarms (14) verläuft.

3. Blasformsystem nach Anspruch 1 oder 2, **dadurch gekennzeichnet, dass** der erste Gelenkarm (14) des Gelenkarmsystems (14, 17) über ein erstes Gelenk (15) schwenkbar am Extrudergehäuse (11) angebracht ist, der erste Gelenkarm (14) mit Abstand von dem ersten Gelenk über ein zweites Gelenk (16) mit dem zweiten Gelenkarm (17) gelenkig verbunden ist, wobei die Gelenkachse dieses zweiten Gelenks (16) parallel zu der Gelenkachse des ersten Gelenks (15) verläuft und der zweite Gelenkarm (17) mit Abstand von dem zweiten Gelenk (16) über ein drittes Gelenk (13) mit dem Extruderkopf (10) verbunden ist, wobei die Gelenkachse dieses dritten Gelenks (13) parallel zu der Gelenkachse des zweiten Gelenks (16) verläuft.

4. Blasformsystem nach einem der Ansprüche 1 bis 3, **dadurch gekennzeichnet, dass** in der maximalen Hubstellung des Extruderkopfs (10) gegenüber dem Extrudergehäuse (11) der erste Gelenkarm (14) und der zweite Gelenkarm (17) so ausgerichtet sind, dass sich ihre Hubwege addieren und die Gelenkachse des am Extruderkopf (10) angebundenen Gelenks (13), insbesondere des dritten Gelenks, eine maximale Entfernung zur Gelenkachse des ersten Gelenks (15) aufweist, während in einer minimalen Hubstellung des Extruderkopfs (10) gegenüber dem Extrudergehäuse (11) sich die Hubwege der beiden Gelenkarme (14, 17) subtrahieren und die Gelenkachse des am Extruderkopf (10) angebundenen Gelenks (13) und die Gelenkachse des ersten Gelenks (15) zusammenfallen oder nahe beieinander liegen.

5. Blasformsystem nach einem der Ansprüche 1 bis 4, **dadurch gekennzeichnet, dass** der Extruderkopf (10) bei einer Schwenkbewegung beider Gelenkarme (14, 17) eine lineare vertikale Hubbewegung vollführt entlang einer Linie, deren Entfernung zum vorderen Ende des Extrudergehäuses bei der Hubbewegung gleichbleibend ist, bei ebenfalls gleichbleibender Länge der Gelenkarme (14, 17) und bei feststehendem Extrudergehäuse.

6. Blasformsystem nach einem der Ansprüche 1 bis 5, **dadurch gekennzeichnet, dass** sich die Gelenkachse des ersten Gelenks (15) in Richtung der Achse des Extrudergehäuses (11) oder parallel dazu erstreckt, sich das erste Gelenk (15) vorn endseitig am Extrudergehäuse (11) befindet und sich die Gelenkachsen des zweiten und dritten Gelenks (16, 13) parallel zur Achse des Extrudergehäuses erstrecken.

7. Blasformsystem nach einem der Ansprüche 1 bis 5, **dadurch gekennzeichnet, dass** sich die Gelenkachse des ersten Gelenks (15) quer zur Achse des Extrudergehäuses (11) erstreckt, sich das erste Gelenk (15) im vorderen Bereich seitlich am Extrudergehäuse (11) befindet und sich die Gelenkachsen des zweiten und dritten Gelenks (16, 13) ebenfalls quer zur Achse des Extrudergehäuses erstrecken.

8. Blasformsystem nach einem der Ansprüche 1 bis 7, **dadurch gekennzeichnet, dass** der Antrieb für das Bewirken der Relativbewegung zwischen Extruderkopf und Extrudergehäuse am Extruderkopf (10) angreift und eine Linearbewegung des Extruderkopfs entlang einer Führung (22) bewirkt wird, wobei mindestens ein Gelenkarm, bevorzugt mindestens zwei Gelenkarme (14, 17) in Schwenkbewegung zwischen dem sich bewegenden Extruderkopf (10) und dem feststehenden Extrudergehäuse (11) mitgenommen werden und wobei die Länge der Gelenkarme (14, 17) jeweils konstant bleibt.

9. Blasformsystem nach einem der Ansprüche 1 bis 8, **dadurch gekennzeichnet, dass** mindestens ein Gelenk der gelenkigen Verbindung mindestens zwei gegeneinander um die Gelenkachse verschwenkbare Gelenkteile aufweist, in denen sich jeweils Kanäle (31, 32; 33, 34; 35) für die plastische Kunststoffmasse befinden, deren einander zugewandte Abschnitte in der Gelenkachse miteinander fluchten und eine durchgehende Verbindung mit bei Verdrehung des Gelenks gleichbleibendem Querschnitt bilden.

10. Blasformsystem nach einem der Ansprüche 1 bis 9, **dadurch gekennzeichnet, dass** mindestens ein Gelenk der gelenkigen Verbindung mindestens zwei gegeneinander um die Gelenkachse verschwenkbare Gelenkteile aufweist, in denen sich jeweils Kanäle für die plastische Kunststoffmasse befinden und eines dieser Gelenkteile mit einem ersten Gelenkarm verbunden ist, welcher zu der Extrudereinrichtung führt und das andere Gelenkteil mit einem zweiten Gelenkarm verbunden ist, welcher zum Extruderkopf führt.

11. Blasformsystem nach einem der Ansprüche 1 bis 10, **dadurch gekennzeichnet, dass** mindestens ein Gelenk (16) der gelenkigen Verbindung mindestens ein Gelenkaußenteil (28) umfasst, welches mit einem ersten Gelenkarm (17) verbunden ist, welcher entweder zum Extruderkopf (10) oder zu der Extruderschnecke (11) führt, wobei sich in dem Gelenkarm (17) mindestens ein Kanal (34) für die plastische Kunststoffmasse befindet, wobei das Gelenk weiterhin ein Gelenkinnenteil (27) umfasst, welches von dem Gelenkaußenteil (28) aufgenommen wird und welches mit einem zweiten Gelenkarm (14) der gelenkigen Verbindung verbunden ist, wobei sich in dem Gelenkinnenteil (27) ein Kanal (33) für die plastische Kunststoffmasse befindet, welcher mit mindestens einem Kanal (31, 34) in einem Gelenkarm fluchtet.

12. Blasformsystem nach einem der Ansprüche 10 oder 11, **dadurch gekennzeichnet, dass** mindestens zwei um die Gelenkachse verschwenkbare Gelenkteile eines Gelenks in einem Rahmen oder einer Halterung gehalten und in Richtung der Gelenkachse gegeneinander gepresst werden.

13. Blasformsystem nach einem der Ansprüche 9 bis 12, **dadurch gekennzeichnet, dass** mindestens zwei gegeneinander um die Gelenkachse verschwenkbare Gelenkteile eines Gelenks im Verbindungsbereich der einander zugewandten Abschnitte der Kanäle für die plastische Kunststoffmasse durch mindestens eine druck- und temperaturbeständige Dichtung abgedichtet sind.

14. Blasformsystem nach einem der Ansprüche 9 bis 13, **dadurch gekennzeichnet, dass** mindestens ein Gelenk der gelenkigen Verbindung mindestens zwei gegeneinander um die Gelenkachse verschwenkbare Gelenkteile aufweist, in denen sich jeweils Kanäle für die plastische Kunststoffmasse befinden, wobei diese Kanäle jeweils einen winkelförmigen Verlauf, vorzugsweise jeweils einen etwa rechtwinkligen Verlauf aufweisen.

15. Blasformsystem nach einem der Ansprüche 1 bis 14, **dadurch gekennzeichnet, dass** dieses mindestens einen Gelenkarm (14, 17) aufweist, in dem ein mindestens einmal etwa rechtwinklig abgewinkelter Kanal für die plastische Kunststoffmasse vorgesehen ist, wobei vorzugsweise mindestens ein Gelenkarm einen zweifach abgewinkelten Kanal (31, 34) in Z-Form oder in C-Form oder U-Form aufweist.

## Claims

1. A blow moulding system for producing hollow bodies by blow moulding comprising at least one extruder device with an extruder screw in an extruder housing, at least one extruder head (parison head) assigned to the extruder screw and at least one blow moulding device with at least one blowing mould,
wherein an articulated connection with at least two articulated joints (13, 15, 16) is provided between the extruder head (10) and the extruder housing (11), so that, with a stationary position of the extruder housing (11), a vertical relative movement of the extruder head (10) with respect to the extruder housing and with respect to the blow moulding device and the blowing mould is possible, wherein the extruder head (10) is connected via an articulated arm system (14, 17) to the front region of the extruder housing (11), which system comprises at least a first articulated arm (14) connected in an articulated manner to the extruder housing, and at least a second articulated arm (17) which is connected in an articulated manner to the first articulated arm and at the end whereof the extruder head (10) is fitted, **characterised in that** the first articulated arm (14) and the second articulated arm (17) are suitable for swivelling in such a way that their strokes add up or subtract depending on the rotary position and such that the articulation axes of the articulated arms (14, 17) run parallel with one another.

2. The blow moulding system according to claim 1, **characterised in that** an articulated connection with at least three articulated joints (13, 15, 16) is provided between the extruder head (10) and the extruder housing (11), the articulation axes of which articulated joints each run parallel to one another, wherein the length of the first articulated arm (14) and of the second articulated arm (17) is in each case invariable in the presence of a stroke movement of the extruder head (10) and wherein the swivelling plane of the second articulated arm (17) runs offset in parallel with respect to the swivelling plane of the first articulated arm (14).

3. The blow moulding system according to claim 1 or 2, **characterised in that** the first articulated arm (14) of the articulated arm system (14, 17) is fitted by means of a first articulated joint (15) in a swivellable manner to the extruder housing (11), the first articulated arm (14) is connected, with a spacing from the first articulated joint, in an articulated manner to the second articulated arm (17) by means of a second articulated joint (16), wherein the articulation axis of this second articulated joint (16) runs parallel to the articulation axis of the first articulated joint (15) and the second articulated arm (17) is connected, at a distance from the second articulated joint (16), to the extruder head (10) by means of a third articulated joint (13), wherein the articulation axis of this third articulated joint (13) runs parallel to the articulation axis of the second articulated joint (16).

4. The blow moulding system according to any one of claims 1 to 3, **characterised in that**, in the maximum stroke position of the extruder head (10) with respect to the extruder housing (11), the first articulated arm (14) and the second articulated arm (17) are orientated in such a way that their stroke paths add up and the articulation axis of the articulated joint (13) connected to the extruder head (10), in particular the third articulated joint, has a maximum distance with respect to the articulation axis of the first articulated joint (15), whereas in a minimum stroke position of the extruder head (10) with respect to the extruder housing (11), the stroke paths of the two articulated arms (14, 17) subtract and the articulation axis of the articulated joint (13) connected to the extruder head (10) and the articulation axis of the first articulated joint (15) coincide or lie close beside one another.

5. The blow moulding system according to any one of claims 1 to 4, **characterised in that** the extruder head (10), with a swivelling movement of the two articulated arms (14, 17), performs a linear vertical stroke movement along a line, the distance whereof from the front end of the extruder housing is constant during the stroke movement, with a likewise constant length of the articulated arms (14, 17) and with a stationary extruder housing.

6. The blow moulding system according to any one of claims 1 to 5, **characterised in that** the articulation axis of the first articulated joint (15) extends in the direction of the axis of the extruder housing (11) or parallel thereto, the first articulated joint (15) is located at the front end face on the extruder housing (11) and the articulation axes of the second and third articulated joint (6, 13) extend parallel to the axis of the extruder housing.

7. The blow moulding system according to any one of claims 1 to 5, **characterised in that** the articulation axis of the first articulated joint (15) extends normal to the axis of the extruder housing (11), the first articulated joint (15) is located in the front region at the side on the extruder housing (11) and the articulation axes of the second and third articulated joint (16, 13) also extend normal to the axis of the extruder housing.

8. The blow moulding system according to any one of claims 1 to 7, **characterised in that** the drive for producing the relative movement between the extruder head and extruder housing engages with the extruder head (10) and a linear movement of the extruder head along a guide (22) is produced, wherein at least one articulated arm, preferably at least two articulated arms (14, 17) are driven in a swivelling motion between the moving extruder head (10) and the stationary extruder housing (11) and wherein the length of the articulated arms (14, 17) in each case remains constant.

9. The blow moulding system according to any one of claims 1 to 8, **characterised in that** at least one articulated joint of the articulated connection comprises at least two articulated joint parts swivellable towards one another around the articulation axis, in which articulated joint parts channels (31, 32; 33, 34; 35) are located in each case for the plastic synthetic compound, the sections of said channels pointing towards one another being aligned with one another in the articulation axis and forming a continuous connection with a cross-section remaining constant during rotation of the articulated joint.

10. The blow moulding system according to any one of claims 1 to 9, **characterised in that** at least one articulated joint of the articulated connection comprises at least two articulated joint parts swivellable towards one another around the articulation axis, in which articulated joint parts channels are located in each case for the plastic synthetic compound and one of these articulated joint parts is connected to the first articulated arm which leads to the extruder device and the other articulated joint part is connected to a second articulated arm which runs to the extruder head.

11. The blow moulding system according to any one of claims 1 to 10, **characterised in that** at least one articulated joint (16) of the articulated connection comprises at least one articulated joint outer part (28), which is connected to a first articulated arm (17) which leads either to the extruder head (10) or the extruder screw (11), wherein at least one channel (34) for the plastic synthetic compound is located in the articulated arm (17), wherein the articulated joint further comprises an articulated joint inner part (27), which is accommodated by the articulated joint outer part (28) and which is connected to a second articulated arm (14) of the articulated connection, wherein a channel (33) for the plastic synthetic compound is located in the articulated joint inner part (27), said channel being aligned with at least one channel (31, 34) in an articulated arm.

12. The blow moulding system according to any one of claims 10 or 11, **characterised in that** at least two articulated joint parts of an articulated joint swivellable around the articulation axis are held in a frame or a holding fixture and pressed against one another in the direction of the articulation axis.

13. The blow moulding system according to any one of claims 9 to 12, **characterised in that** at least two articulated joint parts of an articulated joint swivellable towards one another around the articulation axis are sealed in the connection region of the mutually facing sections of the channels for the plastic synthetic compound by means of at least one pressure- and temperature-resistant seal.

14. The blow moulding system according to any one of claims 9 to 13, **characterised in that** at least one articulated joint of the articulated connection comprises at least two articulated joint parts swivellable towards one another around the articulation axis, in which articulated joint parts channels for the plastic synthetic compound are located in each case, wherein these channels each have an angular course, preferably in each case an approximately right-angled course.

15. The blow moulding system according to any one of claims 1 to 14, **characterised in that** the latter comprises at least one articulated arm (14, 17), in which a channel for the plastic synthetic compound angled off at least once approximately at right angles is provided, wherein preferably at least one articulated arm comprises a channel (31, 34) angled off twice in a Z-shape or in a C-shape or a U-shape.

## Revendications

1. Système de moulage par soufflage destiné à fabriquer des corps creux par moulage par soufflage, comprenant au moins un dispositif d'extrusion avec une vis d'extrusion dans un carter d'extrusion, au moins une tête d'extrusion (tête tubulaire) attribuée à la vis d'extrusion ainsi qu'au moins un dispositif de moulage par soufflage comprenant au moins un moule de soufflage,
sachant qu'entre la tête d'extrusion (10) et le carter d'extrusion (11), une liaison articulée comprenant au moins deux articulations (13, 15, 16) est prévue, de sorte qu'en position fixe du carter d'extrusion (11), un mouvement vertical relatif de la tête d'extrusion (10) par rapport au carter d'extrusion ainsi que par rapport au dispositif de moulage par soufflage et le moule de soufflage soit possible, sachant que la tête d'extrusion (10) est reliée à la partie avant du carter d'extrusion (11) par un système de bras articulés (14, 17), lequel contient au moins un bras articulé (14) relié au carter d'extrusion, ainsi qu'au moins un second bras articulé (17) qui est relié de façon articulée au premier bras articulé, et sur une extrémité duquel la tête d'extrusion (10) est disposée, **caractérisé en ce que** le premier bras articulé (14) et le second bras articulé (17) sont appropriés pour pivoter de façon à ce que leurs courses s'ajoutent ou se soustraient en fonction de la position de rotation et que les axes d'articulation des bras articulés (14, 17) soient parallèles entre eux.

2. Système de moulage par soufflage selon la revendication 1, **caractérisé en ce qu'**une liaison articulée comprenant au moins trois articulations (13, 15, 16) est prévue entre la tête d'extrusion (10) et le carter d'extrusion (11), dont les axes d'articulation sont respectivement parallèles entre eux, sachant que lors d'un mouvement de levée de la tête d'extrusion (10), la longueur du premier bras articulé (14) et du second bras articulé (17) ne peut respectivement pas être modifiée, et sachant que le plan de pivotement du second bras articulé (17) est décalé parallèlement au plan de pivotement du premier bras articulé (14).

3. Système de moulage par soufflage selon la revendication 1 ou 2, **caractérisé en ce que** le premier bras articulé (14) du système de bras articulés (14, 17) est placé sur le carter d'extrusion (11) de façon pivotante par une première articulation (15), le premier bras articulé (14) est relié de façon articulée au second bras articulé (17) à distance de la première articulation par une deuxième articulation (16), sachant que l'axe d'articulation de cette deuxième articulation (16) est parallèle à l'axe d'articulation de la première articulation (15) et le second bras articulé (17) est relié à la tête d'extrusion (10) à distance de la deuxième articulation (16) par une troisième articulation (13), sachant que l'axe d'articulation de cette troisième articulation (13) est parallèle à l'axe d'articulation de la deuxième articulation (16).

4. Système de moulage par soufflage selon l'une des revendications 1 à 3, **caractérisé en ce que** dans la position de levée maximale de la tête d'extrusion (10) par rapport au carter d'extrusion (11), le premier bras articulé (14) et le second bras articulé (17) sont ainsi alignés que leurs courses de levée s'ajoutent, et l'axe d'articulation de l'articulation (13) reliée sur la tête d'extrusion (10), en particulier de la troisième articulation, présente un éloignement maximal par rapport à l'axe d'articulation de la première articulation (15), tandis que dans une position de levée minimale de la tête d'extrusion (10) par rapport au carter d'extrusion (11), les trajets de levée des deux bras articulés (14, 17) se soustraient et l'axe d'articulation de l'articulation (13) reliée sur la tête d'extrusion (10) et l'axe d'articulation de la première articulation (15) coïncident ou sont proches l'un de l'autre.

5. Système de moulage par soufflage selon l'une des revendications 1 à 4, **caractérisé en ce que** la tête d'extrusion (10) exécute un mouvement de levée vertical linéaire lors d'un pivotement des deux bras articulés (14, 17), dont l'éloignement par rapport à l'extrémité avant du carter d'extrusion est constant lors du mouvement de levée, pour une longueur également constante des bras articulés (14, 17) et un carter d'extrusion fixe.

6. Système de moulage par soufflage selon l'une des revendications 1 à 5, **caractérisé en ce que** l'axe d'articulation de la première articulation (15) part en direction de l'axe du carter d'extrusion (11) ou est parallèle à celui-ci, la première articulation (15) se trouve à l'avant sur l'extrémité du carter d'extrusion (11) et les axes d'articulation des deuxième et troisième articulations (16, 13) sont parallèles à l'axe du carter d'extrusion.

7. Système de moulage par soufflage selon l'une des revendications 1 à 5, **caractérisé en ce que** l'axe d'articulation de la première articulation (15) est transversal à l'axe du carter d'extrusion (11), la première articulation (15) se trouve à l'avant sur le côté du carter d'extrusion (11) et les axes d'articulation des deuxième et troisième articulations (16, 13) sont également transversaux à l'axe du carter d'extrusion.

8. Système de moulage par soufflage selon l'une des revendications 1 à 7, **caractérisé en ce que** l'entraînement pour effectuer le mouvement relatif entre la tête d'extrusion et le carter d'extrusion s'effectue sur la tête d'extrusion (10) et un mouvement linéaire de la tête d'extrusion est accompli le long d'un guide (22), sachant qu'au moins un bras articulé, de préférence au moins deux bras articulés (14, 17), sont entraînés en pivotement entre la tête d'extrusion (10) en mouvement et le carter d'extrusion (11) fixe et sachant que la longueur des bras articulés (14, 17) reste respectivement constante.

9. Système de moulage par soufflage selon l'une des revendications 1 à 8, **caractérisé en ce qu'**au moins une articulation de la liaison articulée présente au moins deux parties d'articulation pouvant pivoter l'une contre l'autre sur l'axe d'articulation, dans lesquelles des canaux respectifs (31, 32 ; 33, 34 ; 35) pour la masse de matière plastique sont présents, dont les tronçons tournés l'un vers l'autre affleurent l'un avec l'autre dans l'axe d'articulation et forment une liaison traversante avec une section transversale constante lors de la rotation de l'articulation.

10. Système de moulage par soufflage selon l'une des revendications 1 à 9, **caractérisé en ce qu'**au moins une articulation de la liaison articulée présente au moins deux parties d'articulation pouvant pivoter l'une contre l'autre sur l'axe d'articulation, dans lesquelles des canaux respectifs pour la masse de matière plastique sont présents, et l'une de ces parties d'articulation est reliée à un premier bras articulé qui conduit au dispositif d'extrusion et l'autre partie articulée est reliée à un second bras articulé qui conduit à la tête d'extrusion.

11. Système de moulage par soufflage selon l'une des revendications 1 à 10, **caractérisé en ce qu'**au moins une articulation (16) de la liaison articulée présente au moins une partie extérieure d'articulation (28) qui est reliée à un premier bras articulé (17), qui conduit soit vers la tête d'extrusion (10), soit vers le carter d'extrusion (11), sachant qu'au moins un canal (34) pour la masse de matière plastique est présent dans le bras articulé (17), sachant que l'articulation comprend en outre une partie intérieure d'articulation (27) qui est reçue par la partie extérieure d'articulation (28) et qui est reliée à un second bras articulé (14) de la liaison articulée, sachant qu'un canal (33) pour la masse de matière plastique est présent dans la partie intérieure d'articulation (27), lequel affleure avec au moins un canal (31, 34) dans un bras articulé.

12. Système de moulage par soufflage selon l'une des revendications 10 ou 11, **caractérisé en ce qu'**au moins deux parties d'articulation d'une articulation pouvant pivoter sur l'axe d'articulation sont maintenues dans un cadre ou une fixation et sont pressées l'une contre l'autre en direction de l'axe articulé.

13. Système de moulage par soufflage selon l'une des revendications 9 à 12, **caractérisé en ce qu'**au moins deux parties d'articulation d'une articulation pouvant pivoter sur l'axe d'articulation sont étanchéifiées au niveau de la liaison des tronçons des canaux pour la masse de matière plastique tournés l'un vers l'autre, par au moins un joint résistant à la pression et la température.

14. Système de moulage par soufflage selon l'une des revendications 9 à 13, **caractérisé en ce qu'**au moins une articulation de la liaison articulée présente au moins deux parties d'articulation pouvant pivoter l'une contre l'autre sur l'axe d'articulation, dans lesquelles des canaux respectifs pour la masse de matière plastique sont présents, sachant que ces canaux présentent respectivement un tracé angulaire, présentent de préférence un tracé environ rectangulaire.

15. Système de moulage par soufflage selon l'une des revendications 1 à 14, **caractérisé en ce que** celui-ci présente au moins un bras articulé (14, 17), dans lequel un canal environ rectangulaire ayant au moins un coude pour la masse de matière plastique est prévu, sachant que de préférence au moins un bras articulé présente un canal doublement coudé (31, 34) en forme de Z ou en forme de C ou en forme de U.
